# EUROPÄISCHE PATENTSCHRIFT

(11) **EP 2 767 765 B1**
(45) Veröffentlichungstag und Bekanntmachung des Hinweises auf die Patenterteilung: **28.10.2015**
(21) Anmeldenummer: 13155792.8
(22) Anmeldetag: 19.02.2013
(51) Int. Cl.: F24D 3/12, F16L 3/26, F24D 3/14

(54) **Flächiges Rohrauflageelement, Heiz- und/oder Kühlaggregat und Verfahren zur Erstellung eines Heiz- und/oder Kühlaggregates**
Laminar pipe support element, heating and/or cooling apparatus and method for creating a heating and/or cooling apparatus
Élément de support de tube plat, agrégat de refroidissement et/ou de chauffage et procédé de création d'un agrégat de refroidissement et/ou de chauffage

(43) Veröffentlichungstag der Anmeldung: 20.08.2014
(73) Patentinhaber: Roth Werke GmbH, 35232 Dautphetal (DE)
(72) Erfinder:
(74) Vertreter: Rohmann, Michael

(56) Entgegenhaltungen:
- EP-A1- 1 271 062
- WO-A2-00/68617
- WO-A2-2007/033255
- JP-U- H03 115 323
- US-A1- 2009 014 152

## Beschreibung

Die Erfindung betrifft ein flächiges Rohrlauflageelement gemäß dem Oberbegriff des Anspruchs 1, insbesondere für die Auflage von mit einem fluiden Wärmeträgermedium durchströmten Rohren. Die Erfindung betrifft weiterhin ein Heiz- und/oder Kühlaggregat mit zumindest einem flächigen Rohrlauflageelement. Fernerhin betrifft die Erfindung ein Verfahren zur Erstellung eines solchen Heiz- und/oder Kühlaggregates. - Das erfindungsgemäße flächige Rohrauflageelement bzw. das erfindungsgemäße Heiz- und/oder Kühlaggregat wird/werden insbesondere im Rahmen einer Heizung und/oder Kühlung eines Fußbodens und/oder einer Wand und/oder einer Decke eingesetzt. Das Heizen und/oder Kühlen findet dabei zweckmäßigerweise in den Innenräumen eines Gebäudes statt, beispielsweise in Wohnräumen eines Gebäudes. Als fluides Wärmeträgermedium wird bevorzugt ein flüssiges Wärmeträgermedium und besonders bevorzugt Wasser eingesetzt.

Flächige Rohrauflageelemente und Heiz- und/oder Kühlaggregate der vorstehend beschriebenen Art sind aus der Praxis grundsätzlich in verschiedenen Ausführungsformen bekannt. So sind Plattenaggregate aus einer Dämmstoffplatte und einer darauf aufgeklebten Folien-Deckschicht als Rohrauflageelement bekannt. Zur Fixierung von Rohren auf diesen Plattenaggregaten werden die Rohre übergreifende U-förmige Rohrhalter in den Plattenaggregaten verankert. Mit der Realisierung dieser bekannten Plattenaggregate ist eine relativ aufwändige werksseitige Konfektionierung verbunden. Es muss in aufwändiger Weise eine Vielzahl von Plattenaggregaten im Konfektionierungswerk, beim Händler und beim Installateur gelagert bzw. vorgehalten werden, da je nach den speziellen Anforderungen unterschiedliche Dämmstoffplatten als Unterschicht benötigt werden. - Weiterhin sind Rohrauflageelemente in Form von separaten festen Kunststoffplatten bekannt, die auf eine Dämmschicht aufgebracht werden. Die für die Fixierung der Rohre vorgesehenen Rohrhalter werden in den Kunststoffplatten bzw. Rohrauflageelementen verankert. Dazu sind relativ hochwertige und teure Rohrauflageelemente erforderlich. Im Übrigen sind spezielle Setzgeräte bzw. Tacker in Form von teuren Sonderanfertigungen für das Einbringen der Rohrhalter notwendig. Auch als Rohrhalter können nicht die marktüblichen Rohrhalter eingesetzt werden, sondern die Rohrhalter müssen speziell angefertigt werden. - Wenn Rohrauflageelemente in Form von separaten Platten eingesetzt werden, existieren zwischen den verlegten Platten zwangsläufig zumindest schmale Lücken, die im Rahmen der bekannten Maßnahmen in aufwändiger und kostspieliger Weise mit Klebestreifen überklebt werden müssen. Insbesondere bei nicht sachgemäßer Verlegung verbleiben nichtdestoweniger Lücken zwischen den Platten, die unerwünschte Schallbrücken zwischen dem Estrich und der Dämmschicht hervorrufen.

Das Dokument US 2009/0014152 A1 offenbart den Oberbegriff des Anspruchs 1.

Demgegenüber liegt der Erfindung das technische Problem zugrunde, ein flächiges Rohrauflageelement der eingangs genannten Art anzugeben, mit dem die vorstehend beschriebenen Nachteile vermieden werden können. Weiterhin liegt der Erfindung das technische Problem zugrunde, ein Heiz- und/oder Kühlaggregat mit zumindest einem flächigen Rohrauflageelement anzugeben sowie ein Verfahren zur Erstellung eines solchen Heiz- und/oder Kühlaggregates anzugeben.

Zur Lösung des technischen Problems lehrt die Erfindung zunächst ein flächiges Rohrauflageelement gemäß Anspruch 1. Insbesondere ist das Rohrauflageelement für die Auflage von mit einem fluiden Wärmeträgermedium durchströmten Rohren, wobei zumindest drei bevorzugt rechteckförmige bzw. im Wesentlichen rechteckförmige Flächenelemente jeweils über zumindest ein Scharnier miteinander verbunden sind, so dass die Flächenelemente zu einem Flächenelement-Stapel - Flächenelement auf Flächenelement - zusammenfaltbar bzw. stapelbar sind bzw. der Flächenelement-Stapel zu einem streifenförmigen Rohrauflageelement auseinanderfaltbar bzw. auseinanderklappbar ist. - Nach besonders bevorzugter Ausführungsform der Erfindung ist das zumindest eine Scharnier zweier benachbarter miteinander verbundener Flächenelemente in Längsrichtung des Rohrauflageelementes gesehen alternierend auf der Oberseite und auf der Unterseite der Flächenelemente angeordnet, so dass die Flächenelemente zu einem Flächenelement-Stapel - Flächenelement auf Flächenelement - zusammenfaltbar bzw. stapelbar sind bzw. der Flächenelement-Stapel zu einem streifenförmigen Rohrauflagelement auseinanderfaltbar bzw. auseinanderklappbar ist.

Es liegt im Rahmen der Erfindung, dass das Rohrauflageelement in Form des Flächenelement-Stapels insbesondere für die Lagerung und/oder für den Transport des Rohrauflageelementes vorgesehen ist. Auf diese Weise lässt sich das erfindungsgemäße Rohrauflageelement kompakt lagern und transportieren und auf einfache und wenig aufwändige Weise handhaben. Im Zuge der Verlegung für die Auflage der mit dem fluiden Wärmeträgermedium durchströmten Rohre wird dann der Flächenelement-Stapel zu einem streifenförmigen Rohrauflageelement auseinandergefaltet bzw. auseinandergeklappt. Dann kann das zumindest eine Rohr zweckmäßigerweise mit Hilfe einer Mehrzahl von Rohrhalteeinrichtungen auf das streifenförmige Rohrauflageelement aufgebracht werden. Mit dem Begriff Rohrauflageelement ist im Übrigen nicht gemeint, dass das Rohr unmittelbar auf dem Rohrauflageelement aufliegen muss. Vielmehr ist nach sehr bevorzugter Ausführungsform das zumindest eine Rohr mit Abstand zu dem streifenförmigen flächigen Rohrauflageelement angeordnet und dieser Abstand wird bevorzugt durch eine Mehrzahl von Rohrhalteeinrichtungen vorgegeben, die auf dem Rohrauflageelement angeordnet sind. Das erfindungsgemäße flächige Rohrauflageelement dient insbesondere dem Schutz der Dämmschicht vor dem Eindringen von Feuchtigkeit und zur funktionssicheren Befestigung des Rohres bzw. der Rohre.

Es liegt im Rahmen der Erfindung, dass mehr als drei, vorzugsweise mehr als vier, bevorzugt mehr als fünf und besonders bevorzugt mehr als sechs Flächenelemente erfindungsgemäß über Scharniere miteinander verbunden sind. - Es liegt fernerhin im Rahmen der Erfindung, dass die Flächenelemente die gleiche Fläche bzw. im Wesentlichen die gleiche Fläche aufweisen. Somit haben die Flächenelemente bzw. die im Flächenelement-Stapel übereinanderliegenden Flächenelemente die gleichen bzw. im Wesentlichen die gleichen Flächenabmessungen. Zweckmäßigerweise haben die Flächenelemente die gleiche Form bzw. im Wesentlichen die gleiche Form. Auf diese Weise wird erreicht, dass die Ränder der Flächenelemente im Flächenelement-Stapel miteinander fluchten und insoweit in vorteilhafter Weise ein kantenfreier Flächenelement-Stapel realisiert wird.

Zweckmäßigerweise bestehen die Flächenelemente aus Kunststoff - bevorzugt aus einem extrudierten Kunststoffmaterial - und/oder aus Kartonage bzw. Karton und/oder aus einem Holzfaserwerkstoff. Dass die Flächenelemente aus zumindest einem der vorgenannten Materialien bestehen, meint im Rahmen der Erfindung auch, dass sie im Wesentlichen aus zumindest einem dieser Materialien bestehen. Flächenelemente aus Kunststoff können nach einer Ausführungsform der Erfindung als Kunststofffolien und/oder als Kunststoffschaum verwirklicht sein. - Gemäß einer bevorzugten Ausführungsform der Erfindung ist an zumindest einer Längsseite eines flächigen Rohrauflageelementes eine Klebeschicht bzw. eine unterseitige Klebeschicht vorgesehen. Das ermöglicht die Verbindung zweier benachbarter Rohrauflageelemente durch selbstklebende Überlappung. Nach einer Ausführungsvariante ist eine Klebeschicht streifenförmig an zumindest einer Längsseite auf der Oberseite eines flächigen Rohrauflageelementes vorhanden. Die Klebeschicht ist zweckmäßigerweise mit einer entfernbaren Abdeckschicht, beispielsweise mit einem entfernbaren Silikonpapier abgedeckt. Nach Abziehen dieser Abdeckschicht kann ein weiteres flächiges Rohrauflageelement auf das bereits verlegte Rohrauflageelement aufgeklebt werden und auf diese Weise kann ein adhäsiver Flächenverbund realisiert werden. Grundsätzlich kann auch ein separater Klebestreifen für eine selbstklebende Überlappung auf einem erfindungsgemäßen flächigen Rohrauflageelement aufgebracht werden.

Eine bevorzugte Ausführungsform der Erfindung ist dadurch gekennzeichnet, dass die Flächenelemente eine geschlossene bzw. eine im Wesentlichen geschlossene Oberseite und eine geschlossene bzw. im Wesentlichen geschlossene Unterseite aufweisen und bevorzugt eine zwischen Oberseite und Unterseite angeordnete kanalförmige und/oder wabenförmige Innenkonstruktion. Als Material für diese bevorzugte Ausführungsform des erfindungsgemäßen Rohrauflageelementes eignet sich insbesondere Kartonage bzw. Karton oder extrudiertes Kunststoffmaterial. Bei einer kanalförmigen Innenkonstruktion weist das Rohrauflageelement zweckmäßigerweise lineare bzw. im Wesentlichen lineare Kanäle auf, die sich von einem Rand eines Flächenelementes bis zum gegenüberliegenden Rand des Flächenelementes erstrecken. Es empfiehlt sich, dass Öffnungen an den Rändern der Flächenelemente - insbesondere bei kanalförmiger Innenkonstruktion der Flächenelemente - mittels Imprägnierung und/oder mit Hilfe von Folien vor dem Eindringen von Feuchtigkeit o. dgl. geschützt werden.

Es liegt im Rahmen der Erfindung, dass die Scharniere bzw. Knickstellen eines bereits verlegten flächigen Rohrauflageelementes einen Anschlag bzw. Anschläge bilden, die die Positionierung eines weiteren flächigen Rohrauflageelementes erleichtern. Insoweit funktionieren die Scharniere bzw. Knickstellen als Positionshilfe.

Die Erfindung ist dadurch gekennzeichnet, dass das zumindest eine Scharnier aus dem gleichen Material besteht wie die daran angeschlossenen Flächenelemente. Dieses Scharnier wird vorzugsweise durch Deformation, insbesondere durch Zusammendrücken des Materials zwischen den durch das Scharnier zu verbindenden Flächenelementen gebildet. Es liegt im Rahmen der Erfindung, dass das Scharnier dabei als lineare Knickstelle ausgebildet ist bzw. ausgebildet wird. Diese Art von Scharnier eignet sich insbesondere für die oben beschriebenen Ausführungsformen mit kanalförmiger Innenkonstruktion. - Ein bevorzugtes Verfahren zur Herstellung eines erfindungsgemäßen flächigen Rohrauflageelementes wird nachfolgend erläutert. Dabei wird vorzugsweise von einem Materialstreifen ausgegangen, der zweckmäßigerweise eine ebene geschlossene bzw. im Wesentlichen ebene geschlossene Oberseite sowie eine ebene geschlossen bzw. im Wesentlichen ebene geschlossene Unterseite aufweist. Bevorzugt ist zwischen der Oberseite und der Unterseite des Materialstreifens eine kanalförmige Innenkonstruktion oder eine wabenförmige Innenkonstruktion angeordnet. Gemäß einer bevorzugten Ausführungsform besteht dieser Materialstreifen aus Kartonage bzw. im Wesentlichen aus Kartonage oder der Materialstreifen wurde als Kunststoffteil extrudiert. Es empfiehlt sich, dass man an einem Ende des Materialstreifens einen Streifenabschnitt auf die Oberseite des Materialstreifens umfaltet bzw. umknickt. Die Größe des umgefalteten bzw. umgeknickten Streifenabschnitts entspricht dabei der gewünschten Größe eines Flächenelementes. Somit liegen jetzt bereits zwei Flächenelemente des zu bildenden Flächenelement-Stapels übereinander. Anschließend wird der Materialstreifen an dem Rand der beiden übereinanderliegenden Flächenelemente auf die Unterseite des unteren Flächenelementes umgefaltet bzw. umgeknickt, so dass nunmehr drei Flächenelemente übereinanderliegen. Dieses Umknicken bzw. Umfalten wird fortgeführt, bis die gewünschte Anzahl Flächenelemente den Flächenelement-Stapel bildet. Erforderlichenfalls kann ein übrig gebliebener Rest des Materialstreifens abgetrennt bzw. angeschnitten werden. Es liegt im Rahmen der Erfindung, dass durch das Umfalten bzw. Umknicken an den Knickstellen eine Deformation des Materials des Materialstreifens erfolgt. Es liegt weiterhin im Rahmen der Erfindung, dass bei dieser Verfahrensweise als lineare Knickstellen ausgebildete Scharniere entstehen, die die Flächenelemente des Flächenelement-Stapels miteinander verbinden. Der gebildete Flächenelement-Stapel kann dann am Montageort zu einem streifenförmigen Rohrauflageelement auseinandergefaltet werden. Es liegt in der Erfindung, dass dann die gebildeten Scharniere alternierend an der Oberseite oder an der Unterseite des streifenförmigen Rohrauflageelementes angeordnet sind.

Gemäß besonders bevorzugter Ausführungsform der Erfindung erstrecken sich die Scharniere jeweils über den gesamten Verbindungsbereich zwischen zwei Flächenelementen. Bei dieser Ausführungsform überdecken die Scharniere somit eine Lücke bzw. eine lineare Lücke zwischen zwei Flächenelementen. Sie erfüllen dann nicht nur die Funktion als Verbindungselement zwischen zwei Flächenelementen, sondern ersetzen auch die eingangs im Zusammenhang mit den bekannten Maßnahmen erläuterten Klebestreifen und verhindern damit wirksam das Eindringen von Estrich und/oder Feuchtigkeit durch die Lücken zur Dämmschicht hin. Es liegt im Rahmen der Erfindung, dass lediglich ein einziges Scharnier zwischen zwei miteinander verbundenen Flächenelementen vorgesehen ist, das sich bevorzugt über den gesamten Verbindungsbereich zwischen zwei Flächenelementen erstreckt.

Im Rahmen der Erfindung kann/können auch mehr als ein Scharnier, insbesondere zwei Scharniere oder mehr Scharniere zwischen zwei miteinander verbundenen Flächenelementen vorgesehen sein. Gemäß einer Ausführungsform der Erfindung ist das zumindest eine Scharnier als Scharnierband ausgebildet und dieses Scharnierband ist an den Oberseiten bzw. an den Unterseiten zweier benachbarter Flächenelemente - vorzugsweise mittels eines Klebers - fixiert. Bei dieser Ausführungsform wird also ein bandförmiges Scharnier eingesetzt. Es können auch zwei oder mehr Scharnierbänder bzw. bandförmige Scharniere zwischen zwei miteinander verbundenen Flächenelementen vorgesehen sein. - Empfohlenermaßen besteht das zumindest eine Scharnier aus Kunststoff bzw. im Wesentlichen aus Kunststoff und/oder aus Textilmaterial bzw. im Wesentlichen aus Textilmaterial und/oder aus Papier bzw. im Wesentlichen aus Papier und/oder aus Pappe bzw. im Wesentlichen aus Pappe.

Gegenstand der Erfindung ist auch ein Heiz- und/oder Kühlaggregat, - mit zumindest einer unterseitigen Dämmschicht, zumindest einem auf der Dämmschicht angeordneten streifenförmigen flächigen Rohrauflageelement, mit einer Mehrzahl von auf dem Rohrauflageelement angeordneten bzw. fixierten Rohrhalteeinrichtungen und mit zumindest einem von den Rohrhalteeinrichtungen aufgenommenen Rohr für den Durchfluss eines fluiden Wärmeträgermediums. Es liegt im Rahmen der Erfindung, dass das zumindest eine Rohr an den Rohrhalteeinrichtungen fixiert ist, beispielsweise in Rohraufnahmen der Rohrhalteeinrichtungen eingerastet ist. Es liegt im Rahmen der Erfindung, dass das zumindest eine Rohr mit Abstand zu dem Rohrauflageelement montiert bzw. fixiert wird. Wenn dann anschließend eine Estrichschicht o. dgl. auf das Rohrauflageelement aufgebracht wird, kann dieses Material in vorteilhafter Weise das Rohr vollständig bzw. im Wesentlichen vollständig ummanteln.

Eine bevorzugte Ausführungsform der Erfindung ist dadurch gekennzeichnet, dass die Rohrhalteeinrichtungen mit der Maßgabe fixiert werden bzw. auf dem Rohrauflageelement fixiert werden, dass in dem flächigen Rohrauflageelement keine Durchbrüche bzw. Öffnungen bzw. im Wesentlichen eine Durchbrüche bzw. Öffnungen zur Dämmschicht hin entstehen. Auf diese Weise werden nachteilhafte Schallbrücken zwischen der Dämmschicht und einer aufzubringenden Estrichschicht oder dergleichen vermieden. Die Rohrhalteeinrichtungen können gemäß einer Ausführungsform mittels einer Haftverbindung auf dem flächigen Rohrauflageelement fixiert werden, beispielsweise auf dem flächigen Rohrauflageelement aufgeklebt werden. Es besteht dabei auch die Möglichkeit die Rohrhalteeinrichtungen mittels Klettverbindungen auf dem Rohrauflageelement zu befestigen. Nach einer anderen Ausführungsform der Erfindung werden die Rohrhalteeinrichtungen mit dem flächigen Rohrauflageelement verklammert, wobei die Klammerelemente dann lediglich in das flächige Rohrauflageelement einfassen und zweckmäßigerweise nicht bis zur Dämmschicht durchgreifen.

Grundsätzlich liegt es auch im Rahmen der Erfindung, dass die Rohrhalteeinrichtungen als U-förmige Rohrhalter ausgebildet sind, wobei die beiden U-Schenkel dieser Rohrhalter an ihren Enden Einstichspitzen aufweisen, die das flächige Rohrauflageelement durchdringen bzw. insbesondere bis in die Dämmschicht durchdringen. Es empfiehlt sich dann, dass im Bereich der Einstichspitzen der U-Schenkel jeweils zumindest ein Widerhaken angeordnet ist, der im montierten Zustand der Rohrhalter das flächige Rohrauflageelement hintergreift bzw. untergreift.

Es liegt im Rahmen der Erfindung, dass eine Estrichschicht auf das flächige Rohrauflageelement mit der Maßgabe aufgebracht wird, dass die Estrichschicht das Rohr bzw. die Rohre vollständig bzw. im Wesentlichen vollständig überdeckt und vorzugsweise das Rohr bzw. die Rohre über den gesamten Rohrumfang bzw. im Wesentlichen über den gesamten Rohrumfang umgibt/ummantelt.

Gegenstand der Erfindung ist auch ein Verfahren zur Erstellung eines Heiz- und/oder Kühlaggregates mit einem flächigen Rohrauflageelement, wobei zumindest eine Dämmschicht auf einen Untergrund bzw. auf einen Boden aufgebracht wird, wobei zumindest ein Rohrauflageelement in Form eines Flächenelement-Stapels auf der Dämmschicht zu zumindest einem streifenförmigen Rohrauflageelement ausgefaltet bzw. ausgeklappt wird und wobei eine Mehrzahl von Rohrhalteeinrichtungen mit zumindest einem Rohr auf dem Rohrauflageelement angeordnet wird. Zweckmäßigerweise wird anschließend eine Estrichschicht o. dgl. auf dem flächigen Rohrauflageelement aufgebracht und zwar vorzugsweise mit der Maßgabe, dass das zumindest eine Rohr vollständig ummantelt wird.

Der Erfindung liegt die Erkenntnis zugrunde, dass ein erfindungsgemäßes flächiges Rohrauflageelement zunächst auf einfache und platzsparende Weise lagerbar und transportierbar ist. Ein erfindungsgemäßer Flächenelement-Stapel ist auf einfache und wenig aufwändige Weise handhabbar. Insbesondere die Verlegung am Montageort zum streifenförmigen Rohrauflageelement ist auf einfache und funktionssichere Weise möglich. Zur Realisierung eines erfindungsgemäßen Heiz- und/oder Kühlaggregates können Dämmplatten für die Dämmschicht in der gewünschten Ausführungsform direkt zum Montageort transportiert werden und können dort preisgünstig verlegt werden. Dieser Vorteil ergibt sich dadurch, dass die Rohrauflageelemente getrennt von den Dämmelementen als selbständige Artikel geliefert werden können. Dadurch entfallen eine aufwändige werksseitige Konfektionierung sowie eine aufwändige und teure Lagerung einer Vielzahl von unterschiedlichen Plattenaggregaten. Im Übrigen können bei der Fixierung von Rohren an einem erfindungsgemäßen Heiz- und/oder Kühlaggregat marktübliche Rohrhalter und Setzgeräte bzw. Tacker verwendet werden, so dass teure und aufwändige Sonderanfertigungen nicht erforderlich sind. - Mit den erfindungsgemäßen Rohrauflageelementen können Montagefehler bzw. Verlegungsfehler im Vergleich zu den aus der Praxis bekannten Maßnahmen vollständig vermieden werden oder zumindest weitgehend minimiert werden. Mit einem erfindungsgemäßen flächigen Rohrauflageelement kann insbesondere eine unter dem Rohrauflageelement angeordnete Dämmschicht effektiv vor dem Eindringen von Feuchtigkeit oder Estrich geschützt werden. Dadurch können unerwünschte Schallbrücken wirksam vermieden werden. Zu betonen ist auch, dass das zumindest eine Scharnier zwischen zwei miteinander verbundenen Flächenelementen - insbesondere wenn es sich über den gesamten Verbindungsbereich zwischen diesen Flächenelementen erstreckt - die Lücke zwischen den beiden Flächenelementen effektiv abdeckt und somit dort das Eindringen von Feuchtigkeit und/oder Estrich verhindert. Es ist weiterhin hervorzuheben, dass ein erfindungsgemäßes Rohrauflageelement auf sehr einfache und kostengünstige Weise herstellbar ist.

Nachfolgend wird die Erfindung anhand einer lediglich ein Ausführungsbeispiel darstellenden Zeichnung näher erläutert. Es zeigen in schematischer Darstellung:
- Fig. 1: eine Draufsicht auf ein Heiz- und/oder Kühlaggregat mit einem erfindungsgemäßen streifenförmigen flächigen Rohrauflageelement,
- Fig. 2: eine Seitenansicht eines erfindungsgemäßen streifenförmigen flächigen Rohrauflageelementes und
- Fig. 3: den Gegenstand nach Fig. 2 in einer weiteren Ausführungsform.

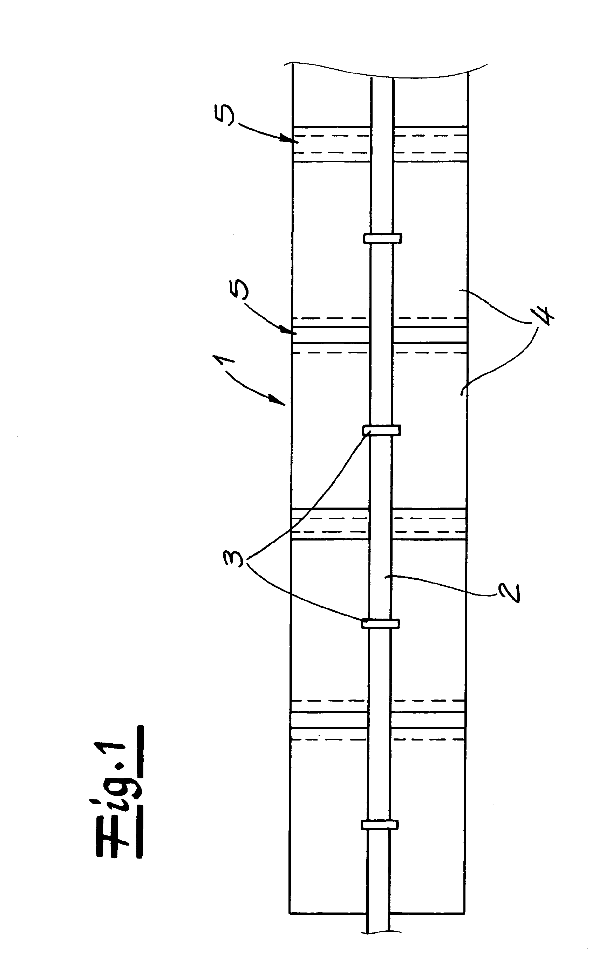

In Fig. 1 ist ein erfindungsgemäßes Heiz- und/oder Kühlaggregat dargestellt. Dabei ist ein erfindungsgemäßes flächiges Rohrauflageelement 1 auf einer nicht näher dargestellten Dämmschicht verlegt. Auf dem flächigen Rohrauflageelement 1 ist ein mit einem fluiden Wärmeträgermedium durchströmtes und in Rohrhalteeinrichtungen 3 aufgenommenes Rohr 2 angeordnet. Es liegt im Rahmen der Erfindung, dass die Rohrhalteeinrichtungen 3 auf dem flächigen Rohrauflageelement 1 fixiert sind, insbesondere mittels einer Haftverbindung, beispielsweise mit Hilfe eines Klebers oder dergleichen. Auf diese Weise werden nachteilhafte Durchbrüche bzw. Öffnungen in dem flächigen Rohraufnahmeelement 1 zur Dämmschicht hin vermieden. Solche Durchbrüche bzw. Öffnungen können zu unerwünschten Schallbrücken zwischen der nachträglich aufgebrachten Estrichschicht und der Dämmschicht führen. Die vorzugsweise auf das flächige Rohraufnahmelement 1 aufzubringende und das Rohr 2 ummantelnde Estrichschicht ist in der Fig. 1 nicht dargestellt worden.

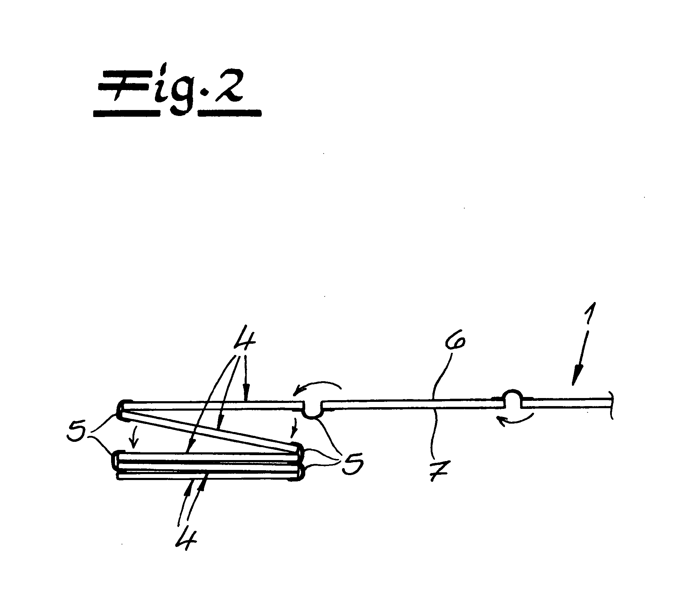

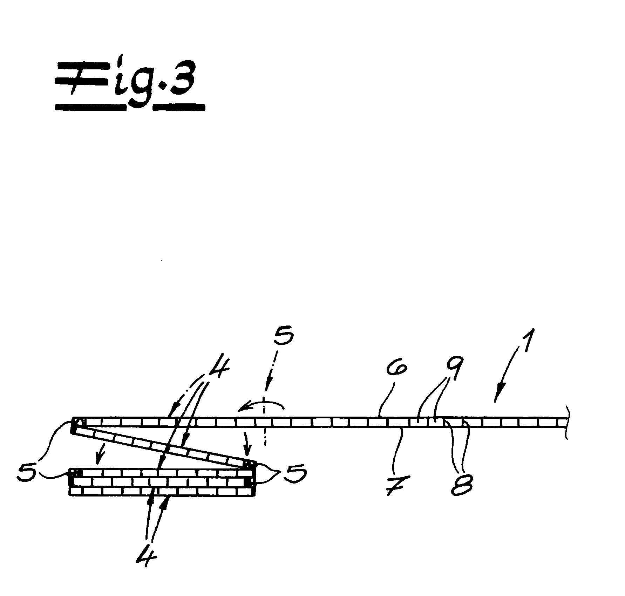

Es liegt im Rahmen der Erfindung, dass das flächige Rohraufnahmeelement 1 - wie in den Figuren dargestellt - aus einer Mehrzahl von rechteckigen Flächenelementen 4 zusammengesetzt ist, die jeweils über zumindest ein Scharnier 5 miteinander verbunden sind. Wie in den Figuren erkennbar, ist das zumindest eine Scharnier 5 zweier benachbarter miteinander verbundener Flächenelemente 4 alternierend auf der Oberseite 6 und auf der Unterseite 7 der Flächenelemente 4 angeordnet. Aufgrund dieser alternierenden Anordnung der Scharniere 5 sind die Flächenelemente 4 zu einem Flächenelement-Stapel - Flächenelement 4 auf Flächenelement 4 - zusammenfaltbar bzw. stapelbar. In den Fig. 2 und 3 ist der Flächenelement-Stapel bereits teilweise gebildet worden. Ein solcher Flächenelement-Stapel ist auf einfache und platzsparende Weise lagerbar und transportierbar. Außerdem kann der Flächenelement-Stapel nach einem Antransport zum Montageort auf einfache und funktionssichere Weise zu einem streifenförmigen Rohrauflageelement 1 (Fig. 1) auseinandergefaltet werden. Montage- bzw. Verlegefehler werden dabei weitgehend ausgeschlossen.

Bei der in der Fig. 2 dargestellten Ausführungsform sind die Scharniere 5 zwischen den miteinander verbundenen Flächenelementen 4 gemäß einer Ausführungsform der Erfindung als Scharnierbänder bzw. als bandförmige Scharniere 5 ausgebildet. Dabei können die bandförmigen Scharniere 5 beispielsweise aus Kunststoff oder aus Textilmaterial bestehen. Zweckmäßigerweise und im Ausführungsbeispiel sind die bandförmigen Scharniere 5 auf die Oberseiten 6 und die Unterseiten 7 der Flächenelemente 4 aufgeklebt.

In der Fig. 3 ist eine weitere Ausführungsform eines erfindungsgemäßen flächigen Rohrauflageelementes 1 dargestellt. Empfohlenermaßen und im Ausführungsbeispiel weisen die Flächenelemente 4 bei dieser Ausführungsform eine geschlossene Oberseite 6 und eine geschlossene Unterseite 7 auf und zwischen Oberseite 6 und Unterseite 7 ist eine kanalförmige Innenkonstruktion 8 angeordnet. Die Kanäle 9 erstrecken sich bevorzugt und im Ausführungsbeispiel quer zur Längsrichtung des streifenförmigen Rohrauflageelementes 1. Das Rohrauflageelement 1 gemäß Fig. 3 kann aus einem extrudierten Kunststoffmaterial bestehen oder ebenfalls aus einem Kartonagematerial. Bei dieser Ausführungsform bestehen die zwischen den Flächenelementen 4 vorgesehenen Scharniere 5 aus dem gleichen Material wie die Flächenelemente 4. Zur Erzeugung des Rohrauflageelementes 1 gemäß Fig. 3 geht man zweckmäßigerweise von einem Materialstreifen mit ebener und undeformierter Oberseite 6 und Unterseite 7 aus. Durch Abknicken eines Materialstreifenabschnittes mit der gewünschten Größe eines Flächenelementes 4 wird ein Scharnier 5 in Form einer sich über die Breite des Materialstreifens erstreckenden linearen Knickstelle ausgebildet. Der Materialstreifenabschnitt wird dabei auf einem benachbarten Materialstreifenabschnitt umgefaltet und auf diese Weise wird ebenfalls ein Flächenelement-Stapel erzeugt, wobei die Scharniere 5 auch hier alternierend auf den Oberseiten 6 bzw. auf den Unterseiten 7 der Flächenelemente 4 angeordnet sind.

## Patentansprüche

1. Flächiges Rohrauflageelement (1), insbesondere für die Auflage von mit einem fluiden Wärmeträgermedium durchströmten Rohren (2), wobei zumindest drei bevorzugt rechteckige bzw. im Wesentlichen rechteckige Flächenelemente (4) jeweils über zumindest ein Scharnier (5) miteinander verbunden sind, so dass die Flächenelemente (4) zu einem Flächenelement-Stapel - Flächenelement auf Flächenelement - zusammenfaltbar sind bzw. der Flächenelement-Stapel zu einem streifenförmigen Rohrauflageelement (1) auseinanderfaltbar ist,
wobei das zumindest eine Scharnier (5) zweier benachbarter Flächenelemente (4) alternierend auf der Oberseite (6) und auf der Unterseite (7) der Flächenelemente (4) angeordnet ist,
**dadurch gekennzeichnet, dass** das zumindest eine Scharnier (5) aus dem gleichen Material besteht wie die darin angeschlossenen Flächenelemente (4).

2. Rohrauflageelement nach Anspruch 1, **dadurch gekennzeichnet, dass** mehr als drei, vorzugsweise mehr als vier und bevorzugt mehr als fünf Flächenelemente (4) miteinander verbunden sind.

3. Rohrauflageelement nach einem der Ansprüche 1 oder 2, **dadurch gekennzeichnet, dass** die Flächenelemente (4) die gleiche Fläche bzw. im Wesentlichen die gleiche Fläche aufweisen.

4. Rohrauflageelement nach einem der Ansprüche 1 bis 3, **dadurch gekennzeichnet, dass** die Flächenelemente (4) aus Kunststoff, bevorzugt aus extrudiertem Kunststoffmaterial und/oder aus Kartonage bzw. Karton und/oder aus einem Holzfaserwerkstoff bestehen.

5. Rohrauflageelement nach einem der Ansprüche 1 bis 4, **dadurch gekennzeichnet, dass** die Flächenelemente (4) eine geschlossene bzw. im Wesentlichen geschlossene Oberseite (6) und eine geschlossene bzw. im Wesentlichen geschlossene Unterseite (7) aufweisen und wobei bevorzugt eine zwischen Oberseite (6) und Unterseite (7) angeordnete kanalförmige Innenkonstruktion (8) und/oder wabenförmige Innenkonstruktion vorhanden ist.

6. Rohrauflageelement nach einem der Ansprüche 1 bis 5, **dadurch gekennzeichnet, dass** das zumindest eine Scharnier (5) durch Deformation, insbesondere durch Zusammendrücken des Materials zwischen den Flächenelementen (4) gebildet wird.

7. Rohrauflageelement nach Anspruch 6, **dadurch gekennzeichnet, dass** das Scharnier (5) als lineare Knickstelle ausgebildet ist.

8. Rohrauflageelement nach einem der Ansprüche 1 bis 7, **dadurch gekennzeichnet, dass** das Scharnier (5) aus Kunststoff und/oder Textilmaterial und/oder aus Papier und/oder aus Pappe besteht.

9. Rohrauflageelement nach einem der Ansprüche 1 bis 8, **dadurch gekennzeichnet, dass** sich das zumindest eine Scharnier (5) über den gesamten Verbindungsbereich zwischen zwei miteinander verbundenen Flächenelementen (4) erstreckt.

10. Heiz- und/oder Kühlaggregat, - mit zumindest einer unterseitigen Dämmschicht, zumindest einem auf der Dämmschicht angeordneten flächigen Rohrauflageelement (1) nach einem der Ansprüche 1 bis 9, mit einer Mehrzahl von auf dem Rohrauflageelement (1) angeordneten Rohrhalteeinrichtungen (3) und mit zumindest einem von den Rohrhalteeinrichtungen (3) aufgenommenen Rohr (2) für den Durchfluss eines fluiden Wärmeträgermediums.

11. Heiz- und/oder Kühlaggregat nach Anspruch 10, **dadurch gekennzeichnet, dass** die Rohrhalteeinrichtungen (3) mit der Maßgabe fixiert sind bzw. auf dem Rohrauflageelement (1) fixiert sind, dass in dem flächigen Rohrauflageelement (1) keine Durchbrüche bzw. Öffnungen bzw. im Wesentlichen keine Durchbrüche bzw. Öffnungen zur Dämmschicht hin entstehen bzw. gebildet werden.

12. Heiz- und/oder Kühlaggregat nach einem der Ansprüche 10 oder 11, **dadurch gekennzeichnet, dass** die Rohrhalteeinrichtungen (3) als U-förmige Rohrhalter ausgebildet sind und dass die beiden U-Schenkel dieser Rohrhalter an ihren Enden Einstichspitzen aufweisen, die das flächige Rohrauflageelement (1) bis in die Dämmschicht durchdringen.

13. Verfahren zur Erstellung eines Heiz- und/oder Kühlaggregates nach einem der Ansprüche 10 bis 12 mit einem flächigen Rohrauflageelement nach einem der Ansprüche 1 bis 9, wobei zunächst zumindest eine Dämmschicht auf einen Untergrund aufgebracht wird, wobei zumindest ein Rohrauflageelement in Form eines Flächenelement-Stapels auf der Dämmschicht zu zumindest einem streifenförmigen Rohrauflageelement (1) ausgefaltet bzw. ausgeklappt wird und wobei eine Mehrzahl von Rohrhalteeinrichtungen (3) mit zumindest einem Rohr (2) auf dem Rohrauflageelement (1) angeordnet wird.

## Claims

1. A flat pipe support element (1), in particular for supporting pipes (2) that carry a flow of liquid heat carrier medium, wherein at least three preferably rectangular or essentially rectangular surface elements (4) are each interconnected by at least one hinge (5), so that the surface elements (4) can be folded together into a surface element stack - surface element on surface element -, or the surface element stack can be folded apart into a strip-type pipe support element (1),
wherein the at least one hinge (5) of two adjacent surface elements (4) is alternately arranged on the upper side (6) and lower side (7) of the surface elements (4),
**characterized in that** at least one hinge (5) consists of the same material as the surface elements (4) attached therein.

2. The pipe support element according to claim 1, **characterized in that** more than three, particularly more than four, and preferably more than five surface elements (4) are interconnected.

3. The pipe support element according to one of claims 1 or 2, **characterized in that** the surface elements (4) exhibit the same surface or essentially the same surface.

4. The pipe support element according to one of claims 1 to 3, **characterized in that** the surface elements (4) consist of plastic, preferably of extruded plastic material and/or cardboard and/or paperboard and/or a wood fiber material.

5. The pipe support element according to one of claims 1 to 4, **characterized in that** the surface elements (4) exhibit a closed or essentially closed upper side (6) and a closed or essentially closed lower side (7), and wherein a channel-shaped inner construction (8) and/or honeycomb inner construction arranged between the upper side (6) and lower side (7) is preferably on hand.

6. The pipe support element according to one of claims 1 to 5, **characterized in that** the at least one hinge (5) is formed through deformation, in particular by pressing together the material between the surface elements (4).

7. The pipe support element according to claim 6, **characterized in that** the hinge (5) is designed as a linear kink point.

8. The pipe support element according to one of claims 1 to 7, **characterized in that** the hinge (5) consists of plastic and/or textile material and/or paper and/or pasteboard.

9. The pipe support element according to one of claims 1 to 8, **characterized in that** the at least one hinge (5) extends over the entire connection area between two interconnected surface elements (4).

10. A heating and/or cooling aggregate with at least one lower-side insulating layer, at least one flat pipe support element (1) according to one of claims 1 to 9 arranged on the insulating layer, with a plurality of pipe holding devices (3) arranged on the pipe support element (1), and with at least one pipe (2) accommodated by the pipe holding devices (3) to carry a flow of liquid heat carrier medium.

11. The heating and/or cooling aggregate according to claim 10, **characterized in that** the pipe holding devices (3) are fixed in such a way or fixed on the pipe support element (1) so that no holes or openings or essentially no holes or openings toward the insulating layer arise or form in the flat pipe support element (1).

12. The heating and/or cooling aggregate according to one of claims 10 or 11, **characterized in that** the pipe holding devices (3) are designed as U-shaped pipe holders, and that the ends of the two U-Iegs of these pipe holders exhibit insertion tips that penetrate through the flat pipe support element (1) until into the insulating layer.

13. A method for generating a heating and/or cooling aggregate according to one of claims 10 to 12 with a flat pipe support element according to one of claims 1 to 9, wherein at least one insulating layer is initially placed on a substrate, wherein at least one pipe support element in the form of a surface element stack is folded out or unfolded on the insulating layer to form at least one strip-type pipe support element (1), and wherein a plurality of pipe holding devices (3) with at least one pipe (2) is arranged on the pipe support element (1).

## Revendications

1. Elément surfacique de support de tuyau (1), destiné en particulier à l'appui de tuyaux (2) dans lesquels passe un produit caloriporteur fluide, au moins trois éléments surfaciques de préférence rectangulaires ou sensiblement rectangulaires (4) étant reliés entre eux respectivement par au moins une charnière (5), de sorte que les éléments surfaciques (4) peuvent être pliés ensemble en une pile d'éléments surfaciques - élément surfacique sur élément surfacique - ou que la pile d'éléments surfaciques peut être dépliée en un élément support de tuyau en forme de bande (1),
l'au moins une charnière (5) de deux éléments surfaciques voisins (4) étant disposée en alternance sur la face supérieure (6) et sur la face inférieure (7) des éléments surfaciques (4),
**caractérisé en ce que** l'au moins une charnière (5) est composée du même matériau que les éléments surfaciques (4) s'y raccordant dedans.

2. Elément support de tuyau selon la revendication 1, **caractérisé en ce que** plus de trois, de préférence plus de quatre et de préférence plus de cinq, éléments surfaciques (4) sont reliés entre eux.

3. Elément support de tuyau selon une des revendications 1 ou 2, **caractérisé en ce que** les éléments surfaciques (4) présentent la même surface ou sensiblement la même surface.

4. Elément support de tuyau selon une des revendications 1 à 3, **caractérisé en ce que** les éléments surfaciques (4) sont composés de plastique, de préférence de matière plastique extrudée, et/ou de cartonnage ou de carton et/ou d'un matériau à fibres de bois.

5. Elément support de tuyau selon une des revendications 1 à 4, **caractérisé en ce que** les éléments surfaciques (4) présentent une surface supérieure fermée ou sensiblement fermée (6) et une surface inférieure fermée ou sensiblement fermée (7), étant prévue de préférence une structure interne (8) en forme de canal et/ou en forme de nid d'abeilles disposée entre la surface supérieure (6) et la surface inférieure (7).

6. Elément support de tuyau selon une des revendications 1 à 5, **caractérisé en ce qu'**au moins une charnière (5) est constituée par déformation, en particulier par compactage du matériau entre les éléments surfaciques (4).

7. Elément support de tuyau selon la revendication 6, **caractérisé en ce que** la charnière (5) se présente sous forme d'un point de pliage linéaire.

8. Elément support de tuyau selon une des revendications 1 à 7, **caractérisé en ce que** la charnière (5) est composée de plastique et/ou de matériau textile et/ou de papier et/ou de carton.

9. Elément support de tuyau selon une des revendications 1 à 8, **caractérisé en ce que** l'au moins une charnière (5) s'étend sur toute la zone de raccordement entre deux éléments surfaciques (4) reliés entre eux.

10. Ensemble de chauffage et/ou de réfrigération, comportant au moins une couche d'isolation inférieure, au moins un élément support de tuyau (1) surfacique disposé sur la couche d'isolation selon une des revendications 1 à 9, comportant une multitude de dispositifs de retenue de tuyaux (3) disposés sur l'élément support de tuyau (1) et au moins un tuyau (2) reçu par les dispositifs de retenue de tuyaux (3) pour l'écoulement d'un produit caloriporteur fluide.

11. Ensemble de chauffage selon la revendication 10, **caractérisé en ce que** les dispositifs de retenue de tuyaux (3) sont fixés ou fixés sur l'élément support de tuyau (1) sous réserve qu'il n'y ait ou ne se forme pas ou sensiblement pas de percées ou d'ouvertures sur la couche d'isolation dans l'élément support de tuyau surfacique (1).

12. Ensemble de chauffage selon une des revendications 10 ou 11, **caractérisé en ce que** les dispositifs de retenue de tuyaux (3) sont réalisés sous forme de porte-tuyaux en forme de U et que les deux branches en U de ces porte-tuyaux présentent à leurs pointes des pointes de piquage qui traversent l'élément support de tuyau surfacique (1) jusqu'à l'intérieur de la couche d'isolation.

13. Procédé de réalisation d'un ensemble de chauffage selon une des revendications 10 à 12 avec un élément support de tuyau surfacique selon une des revendications 1 à 9, dans lequel au moins une couche d'isolation est d'abord posée sur un fond, au moins un élément support de tuyau sous forme de pile d'éléments surfaciques étant déplié ou déployé sur la couche d'isolation en au moins un élément support de tuyau en forme de bande (1) et une multitude de dispositifs de retenue de tuyaux (3) comportant au moins un tuyau (2) étant disposés sur l'élément support de tuyau (1).
